Europäisches Patentamt

European Patent Office

Office européen des brevets

(11) Veröffentlichungsnummer: **0 025 427**

**A1**

(12) # EUROPÄISCHE PATENTANMELDUNG

(21) Anmeldenummer: **80890095.5**

(22) Anmeldetag: **01.09.80**

(51) Int. Cl.³: **C 01 B 13/32**
**C 01 B 7/03**

(30) Priorität: **06.09.79 AT 5882 79**

(43) Veröffentlichungstag der Anmeldung:
**18.03.81 Patentblatt 81/11**

(84) Benannte Vertragsstaaten:
**DE FR GB IT SE**

(71) Anmelder: **Ruthner**
**Industrieanlagen-Aktiengesellschaft**
**Aichholzgasse 51-53**
**A-1121 Wien(AT)**

(72) Erfinder: **Samhaber, Friedrich, Dipl.-Ing. Dr.**
**Schieferhub 5**
**A-4722 Peuerbach(AT)**

(74) Vertreter: **Köhler-Pavlik, Johann, Dipl.-Ing.**
**Margaretenplatz 5**
**A-1050 Wien(AT)**

(54) Verfahren und Vorrichtung zur Umwandlung von lösungs- oder kristallwasserhaltigen Metallchloriden in Metalloxyde unter Gewinnung von 30-33iger Salzsäure.

(57) Zur Umwandlung von lösungs- oder kristallwasserhaltigen Metallchloriden in Metalloxyde unter Gewinnung von 30-33%iger Salzsäure wird in die Röststufe mit dem Metallchlorid Wasser eingebracht, wobei die Summe von Metallchlorid und Wasser, vermindert um die bei der Röstung verbrauchte Reaktionswassermenge maximal so groß ist, daß pro Gewichtsteil in der Röstung gebildeten Chlorwasserstoffs maximal 2.03 Gewichtsteile Wasser, falls man 33%iger Salzsäure erzeugen will, oder maximal 2.33 Gewichtsteile Wasser, wenn man 30%ige Salzsäure erzeugen will, in der anschließenden Absorptions-bzw. Kondensationseinrichtung zur Verfügung stehen.

EP 0 025 427 A1

Croydon Printing Company Ltd

- 1 -

## Verfahren und Vorrichtung zur Umwandlung von lösungs- oder kristallwasserhältigen Metallchloriden in Metalloxyde unter Gewinnung von 30-33%iger Salzsäure

Bei Pyrohydrolyse-Reaktionen, bei welchen Metallchloride in Gegenwart von Wasserdampf und gegebenenfalls Sauerstoff in die entsprechenden Oxyde übergeführt werden, fällt - falls diese Pyrohydrolyse durch Sprühröstung der Metallchloridlösung durchgeführt wird - als Nebenprodukt Salzsäure an, deren Konzentration nicht wesentlich über 18 % gesteigert werden kann. In vielen Fällen wäre jedoch eine höherprozentige, z.B. 30 - 33 %ige Salzsäure erwünscht, da nur diese ein Verkaufsprodukt darstellt und Salzsäure von geringerer Konzentration kaum verkaufbar und meist schwer verwertbar ist.

Es wurde nun versucht, und es ist bekannt, bei der thermischen Zersetzung bei direkter Beheizung nicht von Metallchloridlösungen oder kristallwasserhaltigen Metallchloriden, sondern von lösungsmittel- und kristallwasserfreien Metallchloriden auszugehen und die Röstung bzw. thermische Zersetzung in zwei Stufen vorzunehmen, wobei in der ersten Stufe weniger Wasser zugegeben wird, als die Hydrolyse der Metallchloride erfordert und in der zweiten Stufe eine größere Menge Wasser zugesetzt wird. Die bei der zweiten Röststufe anfallende unterazeotrope Säure wird zur Absorption der bei der ersten Röststufe anfallenden Abgase benützt und somit eine Salzsäure höherer Konzentration erzeugt.

Dieses Verfahren hat den Nachteil, daß es nur von Metallchloriden, die frei von Lösungsmittel oder Kristallwasser sind, ausgehen kann und daher im wesentlichen auf Metallchloride beschränkt ist, welche ohne Zersetzung thermisch völlig dehydratisiert werden können. Aber selbst unzersetzt trockenbare Chloride sind in wasserfreier Form häufig schwer und problematisch herstellbar und manipulierbar, viele davon sind sehr hygroskopisch. Weiters hat dieses Verfahren den Nachteil, daß es zusätzlich zur Vortrocknung noch zwei separate Röststufen erfordert, was zusätzlichen apparativen, manipulatorischen und regeltechnischen Aufwand bedingt.

Es ist bis jetzt nicht gelungen, ausgehend von lösungsmittel- oder kristallwasserhältigen Metallchloriden - welche wesentlich leichter herzustellen sind als kristallwasserfreie - durch thermische Zersetzung bei direkter Beheizung in einer einzigen Röststufe als Nebenprodukt 30 - 33%ige Salzsäure zu gewinnen.

Es wurde nun gefunden, daß es möglich ist, Nachteile der geschilderten Art zu vermeiden und 30 - 33%ige Salsäure als Nebenprodukt der Röstung wasserhältiger Metallchloride zu erhalten, wenn für die in einer Röststufe mit indirekter Beheizung durchgeführte thermische Zersetzung ein Metallchlorid eingesetzt wird, dessen Wassergehalt mindestens soweit reduziert wurde, daß die Restwassermenge ausreicht, um den Reaktionswasserbedarf der Röstreaktion, eventuelle auftretende Wasserverluste und den Absorptionswasserbedarf - der erforderlich ist, um aus den bei thermischer Zersetzung frei werdenden Chlorwasserstoff 30 - 33%ige Salzsäure zu bilden - zu decken. Das bei thermischer Zersetzung anfallende Gemisch aus Wasserdampf und Chlorwasserstoff wird in der üblichen Weise in einer anschließenden gekühlten Kondensations- oder Absorptionseinrichtung kondensiert bzw. - wenn es der Wassergehalt des Einsatzstoffes erlaubt - nach Zusatz von Wasser oder verdünnter Salzsäure absorbiert.

Die Erfindung betrifft somit ein Verfahren zur Herstellung von 30 - 33%iger Salzsäure als Nebenprodukt der thermischen Zersetzung von wasserhältigen Metallchloriden zu Metalloxyden, das dadurch gekennzeichnet ist, daß die Röstung in einer Stufe und bei indirekter Beheizung vorgenommen wird und daß die Summe der mit dem Metallchlorid - in Form von Kristall- oder Lösungswasser - eingebrachten und der in die Röstung in Form von Wasserdampf eingebrachten Wassermenge, vermindert um die bei der Röstung verbrauchte Reaktionswassermenge maximal so groß ist, daß sie mit der die Röstzone verlassenden Chlorwasserstoffmenge eine 30 - 33%ige Salzsäure bildet, daß also pro Gewichtsteil in der Röstung gebildeten Chlorwasserstoffs maximal 2.030303 Gewichtsteile Wasser, falls man 33%ige Salzsäure erzeugen will, oder maximal 2.333333 Gewichtsteile Wasser, wenn man 30%ige Salzsäure erzeugen will, in der anschließenden Absorptions- bzw. Kondensationseinrichtung zur Verfügung stehen. Vorzugsweise wird die Wassermenge maximal so groß gewählt, daß kein Restchlorwasserstoff übrig bleibt. Falls jedoch eine geringere Wassermenge verwendet wird, kann ein Restchlorwasserstoff als Nebenprodukt anfallen.

In einer Formel zusammengefaßt bedeutet dies:

$$(H_2O_{MeClxSalz} + H_2O_{MeClxLösung} + H_2O_{Dampf} - H_2O_{Reaktionswasser\ der\ Röstung}$$

$$\leq f.HCl\ aus\ der\ Röstung$$

$$f = 2.030303 - 2.333333$$

oder

$$(A + B + C) - D \leq f.E.$$

A = Wassermenge, die durch das vorgetrocknete Metallchloridsalz eingetragen wird

B = Wassermenge, welche durch evtl. in die Röstzone eingeleitete Metallchloridlösung eingetragen wird

C = Wassermenge, welche in Form von Wasserdampf in die Röstzone eingebracht wird

D = Menge des bei der Metallchlorid-Röstreaktion gebildeten Reaktionswassers

E = Menge des bei der Metallchloridröstreaktion gebildeten Chlorwasserstoffs

Wenn die Menge des bei der Kondensation bzw. Absorptionseinrichtung zur Verfügung stehenden Wassers geringer ist
als f.E., dann muß soviel zusätzliches Absorptionswasser F
zugeführt werden, als folgender Formel entspricht:

$$F = f \cdot E - (A+B+C)+D$$

oder es wird Chlorwasserstoff als Nebenprodukt der konzentrierten Salzsäure gebildet.

Gegenstand der Erfindung ist auch eine Vorrichtung zur
Durchführung dieses Verfahrens, welche dadurch gekennzeichnet ist, daß sie eine Trocknungseinrichtung, eine
dieser nachgeschaltete Röstvorrichtung, eine von letzterer
gespeiste Absorptions- und Kondensationskolonne, welche
gleichzeitig zum Vorwärmen der Metallchloridlösung eingerichtet ist, und einen zwischen Kolonne und Trocknungseinrichtung geschalteten Vorverdampfer umfaßt.

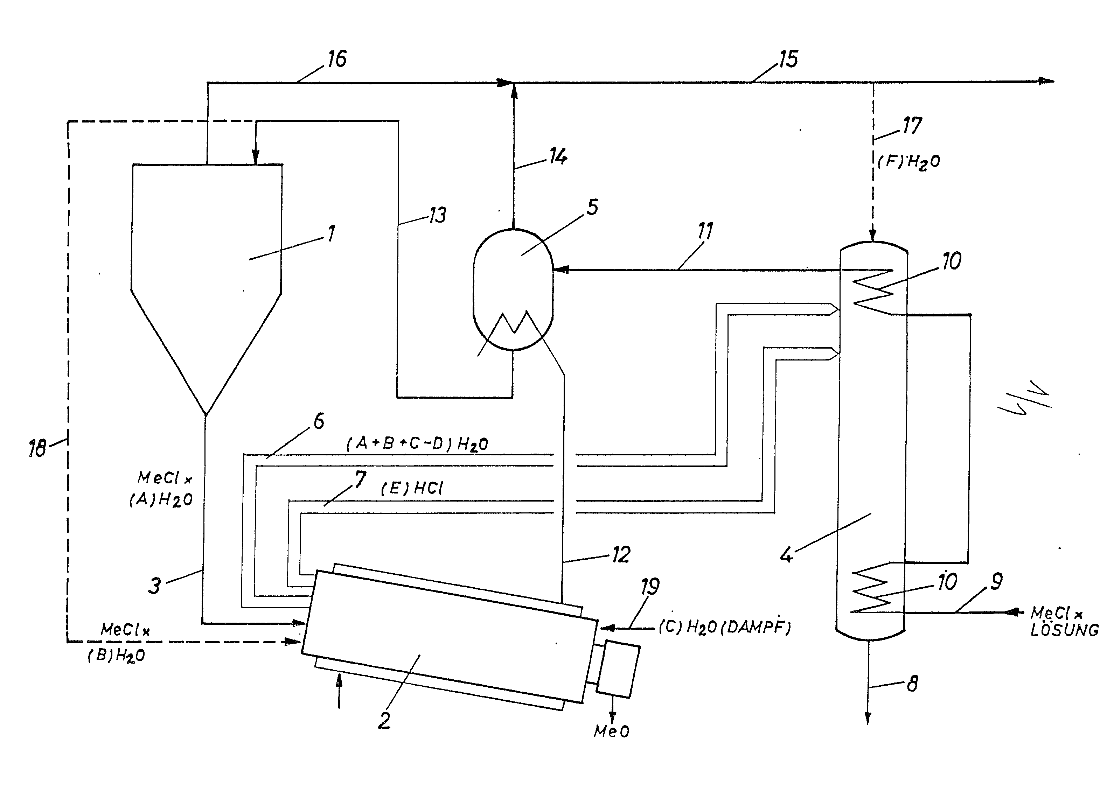

Eine solche zur Durchführung des erfindungsgemäßen Verfahrens vorgesehene Vorrichtung ist auf der Zeichnung in
weitgehend vereinfachter Form und rein beispielsweise
dargestellt.

Diese Vorrichtung besteht aus einer Trocknungsvorrichtung 1,
die vorzugsweise als Sprühtrockner ausgebildet sein kann,
aus einer Röstvorrichtung 2, insbesondere in Form eines
Drehrohrofens, welche über eine Leitung 3 mit dem Austragende der Trocknungsvorrichtung 1 in Verbindung steht,
einer Absorptions- und Kondensationskolonne 4, welche
gleichzeitig auch zum Vorwärmen der Metallchloridlösung
dient, und aus einem Vorverdampfer 5.

Vom höhergelegenen Ende des Drehrohrofens gehen Leitungen 6
und 7 aus, durch welche Wasserdampf und Chlorwasserstoffdämpfe aus dem Drehrohrofen in die Kolonne 4 geleitet
werden, um in dieser verflüssigt zu werden. Die so entstandene Salzsäure wird über die Leitung 8 der Kolonne 4
entnommen.

- 5 -

0025427

Die Leitung 9 dient zum Zuführen von Metallchloridlösung (Rohlösung) und bildet innerhalb der Kolonne 4 eine einzige oder mehrere in Serie geschaltete Gegenstrom-Wärmetauscherwendeln 10. Diese Leitung 9 ist sodann als Verbindung 11 zum Vorverdampfer 5 geführt.

Dieser letztere kann über eine Rohrleitung 12 mit den heißen Abgasen des Drehrohrofens betrieben werden. Zum Verbringen der bereits eingedickten Metallchloridlösung vom Vorverdampfer 5 in die Trocknungseinrichtung 1 ist die Leitung 13 vorgesehen. Der aus dem Trockner 1 bei Leitung 16 entweichende (unter Umständen HCl-haltige) Wasserdampf wird zusammen mit dem bei Leitung 14 aus dem Vorverdampfer 5 entweichenden Wasserdampf über Leitung 15 und 17 der Kondensationskolonne 4 zugeführt und dort kondensiert. Beim Zusammentreffen der Leitungen 15 und 17 kann im Bedarfsfall ein Teil des Wasserdampfes abgezogen werden.

Auch von der Leitung 13 geht eine Abzweigung aus, und zwar die Zweigleitung 18, die ebenfalls mit einem nicht gezeigten Ventil versehen ist. Über diese Leitung 18 kann insbesondere zur genauen Einstellung der Konzentration der über die Leitung 8 abfließenden Salzsäure bzw. zur Regulierung des Wasserhaushaltes im Drehrohrofen eingedickte Metallchloridlösung unmittelbar dem Drehrohrofen zugeführt werden.

Am Austragsende des Drehrohrofens ist an diesen eine Leitung 19 angeschlossen, über welche Wasserdampf oder verdünnte Salzsäure zugeführt werden kann.

In der Praxis wird das Verfahren so durchgeführt, daß eine Metallchloridlösung, z.B. durch Sprühtrocknen in kristallwasserhältiges festes Metallchlorid des gewünschten Wassergehaltes übergeführt und dieses einem indirekt beheizten Röstofen, welcher vorzugsweise als Drehrohrofen ausgebildet ist, zugeleitet wird. In diesem vollzieht sich die weitere Trocknung und Röstung zu Metalloxyd und Chlorwasserstoff. Im Drehrohrofen können die Trocken- und die Röstzone voneinander getrennt werden, wobei vorzugsweise der aus der

Röstzone entweichende Chlorwasserstoff der Trockenzone zugeführt wird und den Trockenvorgang unterstützt. Das in jedem dieser Fälle resultierende Chlorwasserstoff-Wasserdampfgemisch wird der Kondensations- bzw. Absorptionseinrichtung zugeleitet und in 30 - 33%ige Salzsäure übergeführt. Muß in dieser zusätzliches Absorptionswasser zugesetzt werden, so wird dazu vorzugsweise Kondensat aus dem bei der Sprühtrocknung anfallenden Wasserdampf in der oben definierten Menge F verwendet.

Zur möglichst günstigen Beeinflussung des Reaktionsgleichgewichtes ist es empfehlenswert, dem Röstofen im Gegenstrom zum Fluß des gebildeten Metalloxydes Wasserdampf (oder verdünnte Salzsäure) im oben definierten Ausmaß C zuzusetzen in der Nähe der Austragstelle des Metalloxydes.

Falls es zur Aufrechterhaltung des Wasserhaushaltes erforderlich ist, kann auch Metallchloridlösung eingebracht werden.

Die Abwärme des bei der indirekten Röstung anfallenden Abgases wird vorzugsweise für die Konzentrierung bzw. Vorwärmung der eingesetzten Metallchloridlösung genutzt.

Ausführungsbeispiele:

Beispiel 1:
105 kg/h einer wässrigen Lösung von 420 g/l $MgCl_2$ werden nach Passieren der Wärmetauscheinrichtung der Absorptionskolonne 4 dem Vakuumdampfer 2 zugeleitet, dort konzentriert und das Konzentrat in einer Sprühtrocknungsanlage 1 bis zum Magnesiumchlorid-Dihydrat getrocknet. Dieses Dihydrat wird im Drehrohrofen 2 unter Einblasen von 6,1 kg/h Wasserdampf bei 600°C zu 13,6 kg/h MgO abgeröstet, wobei ein gasförmiges Gemisch von 24,5 kg/h HCl und 11 kg/h Wasser entwickelt und in der Absorptionskolonne 4 unter Zusatz von 38,7 kg/h Wasser in 74,2 kg/h 33%ige Salzsäure umgewandelt wird. Das Abgas aus der indirekten Beheizung des Drehrohrofens wird zur Beheizung des Vakuumverdampfers benutzt.

Beispiel 2:

105 kg/h einer wässrigen Lösung von 420 g/l $MgCl_2$ werden in analoger Weise wie bei Beispiel 1 angegeben behandelt, jedoch im Sprühtrockner nicht bis zum Magnesiumchlorid-Dihydrat, sondern zu einem Magnesiumchlorid mit einem Gehalt von 9,2 Mol Wasser getrocknet. Dieses Produkt wird dem Drehrohrofen 2 zugeführt und dort bei 620°C zu 13,6 kg/h MgO geröstet. Aus dem Röstofen entweicht ein Gemisch von 24,5 kg/h HCl und 49,7 kg Wasserdampf, welcher in einem anschließenden Kondensator 4 zu 72,2 kg/h 33%iger Salzsäure kondensiert wird.

Beispiel 3:

106 kg/h einer wässrigen Lösung von $AlCl_3$ mit einer Konzentration von 415 g/l $AlCl_3$ werden in analoger Weise wie bei Beispiel 1 angegeben behandelt und in der Sprühtrocknungsanlage bis zum $AlCl_3 \cdot 6H_2O$ (Hexahydrat), entsprechend einer Menge von 28,9 kg/h $AlCl_3$ und 23,4 kg/h $H_2O$, vorgetrocknet. Dieses Hexahydrat wird im Drehrohrofen zu 12,1 kg/h Aluminiumoxyd abgeröstet, wobei 30kg/h Wasserdampf zugesetzt werden. Den Röstofen verläßt ein Gemisch von 26,3 kg/h Chlorwasserstoff und 53,4 kg/h Wasserdampf, welches in der anschließenden Kondensationseinrichtung zu 79,7 kg/h 33%ige Salzsäure kondensiert wird.

Patentansprüche

1. Verfahren zur Umwandlung von kristall- und lösungswasserhältigen Metallchloriden in Metalloxyde unter Gewinnung von 30 - 33%iger Salzsäure in einer einzigen Röststufe bei indirekter Beheizung, dadurch gekennzeichnet, daß die Summe des in die Röststufe eingebrachten Wassers maximal so gewählt wird, daß sie, vermindert um die bei der Röstung verbrauchte Reaktionswassermenge, maximal dem 2.030303-(bei 33% Salzsäure) bzw. maximal dem 2.333333-fachen (bei 30% Salzsäure) der Chlorwasserstoffmenge entspricht, welche bei der Röstreaktion frei wird.

2. Verfahren nach Anspruch 1, dadurch gekennzeichnet, daß die Summe des in die Röststufe eingebrachten Wassers dem 2.030303- (bei 33% Salzsäure) - 2.333333-fachen (bei 30% Salzsäure) der Chlorwasserstoffmenge entspricht, welche bei der Röstreaktion frei wird.

3. Verfahren nach Anspruch 1, dadurch gekennzeichnet, daß jene Wassermenge der dem Röstofen nachgeschalteten Absorptionseinrichtung zugesetzt wird, welche sich aus der Differenz zwischen der 2.030303 - 2.333333-fachen Menge des gebildeten Chlorwasserstoffs und der Summe des in die Röststufe eingebrachten Wassers - vermindert um die bei der Röstung verbrauchte Reaktionswassermenge - errechnet.

4. Vorrichtung zur Durchführung des Verfahrens nach einem der Ansprüche 1 bis 3, dadurch gekennzeichnet, daß sie eine Trocknungseinrichtung (1), eine dieser nachgeschaltete Röstvorrichtung (2), eine von letzterer gespeiste Absorptions- und Kondensationskolonne (4), welche gleichzeitig zum Vorwärmen der Metallchloridlösung eingerichtet ist, und einen zwischen Kolonne (4) und Trocknungseinrichtung (1) geschalteten Vorverdampfer (5) umfaßt.

5. Vorrichtung nach Anspruch 4, dadurch gekennzeichnet, daß vom Vorverdampfer (5) eine Wasserdampfabführleitung (14) ausgeht, welche über Zweigleitungen (16, 17) mit der

0025427

Trocknungseinrichtung (1) und mit der Kolonne (4) in Verbindung steht.

6. Vorrichtung nach Anspruch 4, dadurch gekennzeichnet, daß der Vorverdampfer (5) außer mit der Trocknungsvorrichtung (1) auch mit der Röstvorrichtung (2) über eine Leitung (18) verbunden ist.

1/1

| | | Nummer der Anmeldung |
|---|---|---|
| Europäisches Patentamt | **EUROPÄISCHER RECHERCHENBERICHT** | EP 80 89 0095.5 |

| | **EINSCHLÄGIGE DOKUMENTE** | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - C - 1 102 712 (INTERNATIONAL MINE-RALS & CHEMICAL CORP.) <br> * Anspruch 1; Spalte 3, Zeilen 47 bis 55 * <br> -- | 1 | C 01 B 13/32 <br> C 01 B 7/03 |
| A | DE - A1 - 2 532 022 (DEAD SEA WORKS) <br> * Ansprüche 1, 2, 9, 10 * <br> -- | | |
| A | DE - A - 2 254 346 (RUTHNER INDUSTRIE-PLANUNGS-AG) <br> -- | | **RECHERCHIERTE SACHGEBIETE (Int. Cl.3)** |
| A | DE - B - 1 667 724 (SÜD-CHEMIE) <br> -- | | C 01 B 7/00 <br> C 01 B 13/00 |
| A | AT - B - 284 062 (RUTHNER INDUSTRIE-PLANUNGS-AG) <br> ---- | | C 01 F 5/00 <br> C 01 F 7/00 <br> C 01 G 1/02 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

| X | Der vorliegende Recherchenbericht wurde für alle Patentansprüche erstellt |
|---|---|

| Recherchenort <br> Berlin | Abschlußdatum der Recherche <br> 31-10-1980 | Prüfer <br> KESTEN |
|---|---|---|

EPA form 1503.1 06.78